# EUROPEAN PATENT APPLICATION

(11) **EP 3 263 248 A1**
(43) Date of publication of application: **03.01.2018**
(21) Application number: 16755497.1
(22) Date of filing: 23.02.2016
(51) Int. Cl.: B22F 1/00, B22F 1/02, B82Y 30/00, B82Y 40/00, H01B 1/22, H01B 5/00, H01B 13/00, B22F 9/24

(54) **COPPER-CONTAINING PARTICLES, CONDUCTOR-FORMING COMPOSITION, METHOD FOR MANUFACTURING CONDUCTOR, CONDUCTOR AND DEVICE**

(30) Priority: 27.02.2015 JP 2015038204
(71) Applicant: Hitachi Chemical Company, Ltd., Chiyoda-ku Tokyo 100-6606 (JP)
(72) Inventor: URASHIMA, Kohsuke, Tokyo 100-6606 (JP); YONEKURA, Motoki, Tokyo 100-6606 (JP); KUMASHIRO, Yasushi, Tokyo 100-6606 (JP)
(74) Representative: Adam, Holger
(86) International application number: PCT/JP2016/055282
(87) International publication number: WO 2016/136753

(57) **Abstract**

Copper-containing particles each include: a core particle containing copper; and an organic substance on at least a part of the surface of the core particle, in which a proportion of copper-containing particles having a major-axis length of 50 nm or less is 55% by number or less with respect to the total number of the copper-containing particles.

## Description

### Technical Field

The present invention relates to copper-containing particles, a conductor-forming composition, a method of producing a conductor, a conductor, and an apparatus.

### Background Art

So-called printed electronics methods including a step of applying an electroconductive material such as an ink or a paste containing metal particles of copper or the like onto a substrate by ink jet printing, screen printing, or the like, and a step of changing into a conductor, in which the electroconductive material is heated to fuse the metal particles to exhibit electroconductivity, have been known as a method of forming a metal pattern. As the metal particles contained in the electroconductive material, metal particles on the surfaces of which an organic substance is deposited as a coating material in order to suppress oxidation of the metal and to enhance storage stability have been known.

Japanese Patent Application Laid-Open (JP-A) No. 2012-72418 describes a copper particle coated with an organic substance, which is capable of being fused at a low temperature and capable of exhibiting favorable electroconductivity, and a method of producing the copper particle. The copper particle described in JP-A No. 2012-72418 is produced by a method including: a step of mixing a copper precursor such as copper oxalate with a reducing compound such as hydrazine to obtain a composite compound, and a step of heating the composite compound in the presence of an alkylamine. In Examples in JP-A No. 2012-72418, the ink containing the produced copper particles was heated to 300°C at 60°C/min in an argon atmosphere, followed by maintaining for 30 minutes, thereby achieving a change into a conductor.

Japanese Patent Application Laid-Open (JP-A) No. 2014-148732 describes a method of producing a copper particle by using a fatty acid copper as the copper precursor in the method described in JP-ANo. 2012-72418. In Examples in JP-ANo. 2014-148732, a thin film formed from the obtained copper particles was heated at 200°C, whereby the thin film was changed into a conductor.

### SUMMARY OF INVENTION

### Technical Problem

In recent years, against the background of improvement in production efficiency, the expansion of the variety of substrates used, and the like, the development of technology enabling the fusion of metal particles at a lower temperature (for example, 150°C or less) has been demanded. Therefore, the development of metal particles capable of being fused at a temperature lower than the temperatures described in JP-A No. 2012-72418 or JP-A No. 2014-148732, and a method of forming a conductor by using the metal particles has been demanded.

### Solution to Problem

In view of the problems described above, the invention aims to provide copper-containing particles having superior fusion property at a low temperature, a conductor-forming composition containing the copper-containing particles, a method of producing a conductor, which is capable of being performed at a low temperature, a conductor capable of being produced at a low temperature, and an apparatus including the conductor.

The means for solving the problems described above include the following aspects.
<1> Copper-containing particles, each of which comprises:
   a core particle comprising copper; and
   an organic substance on at least a part of a surface of the core particle,
   wherein a proportion of copper-containing particles having a major-axis length of 50 nm or less is 55% by number or less with respect to a total number of the copper-containing particles.
<2> The copper-containing particles according to <1>, wherein a proportion of copper-containing particles having a major-axis length of 70 nm or more is 30% by number or more with respect to the total number of the copper-containing particles.
<3> The copper-containing particles according to <1> or <2>, wherein the copper-containing particles have an average major-axis length of 55 nm or more.
<4> The copper-containing particles according to any one of <1> to <3>, wherein the copper-containing particles have an average major-axis length of 500 nm or less.
<5> The copper-containing particles according to any one of <1> to <4>, further comprising copper-containing particles having a circularity of from 0.70 to 0.99.
<6> A conductor-forming composition, comprising:
   the copper-containing particles according to any one of <1> to <5>; and
   a dispersion medium.
<7> A method of producing a conductor, the method comprising: heating the conductor-forming composition according to <6>.
<8> A conductor, comprising a structure in which the copper-containing particles according to any one of <1> to <5> are fused to each other.
<9> An apparatus, comprising the conductor according to <8>.

### Advantageous Effects of Invention

According to the invention, copper-containing particles having superior fusion property at a low temperature, a conductor-forming composition including the copper-containing particles, a method of producing a conductor, which is capable of being performed at a low temperature, a conductor which is capable of being produced at a low temperature, and an apparatus including the conductor, are provided.

### BRIEF DESCRIPTION OF DRAWINGS

Fig. 1 is a transmission electron microscope image of copper-containing particles synthesized in Example 1.
Fig. 2 is a transmission electron microscope image of copper-containing particles synthesized in Comparative Example 1.

### DESCRIPTION OF EMBODIMENTS

Embodiments of the invention will be described in detail below. However, the invention is not limited to the embodiments described below. In the embodiments described below, a constitutional element (also including an element step or the like) in the embodiments is not essential unless otherwise specified or considered to be theoretically obviously essential. The same also applies to the numerical values and the ranges of the numerical values, and the invention is not limited by the numerical values and the ranges.

The term "step" herein encompasses not only an independent step but also a step of which the object is achieved even in a case in which the step is unable to be definitely distinguished from another step.

A numerical range expressed by "x to y" herein includes the values of x and y in the range as the minimum and maximum values, respectively.

In a case in which plural kinds of substances corresponding to each constituent are present in a composition, the content of each constituent in the composition herein means the total amount of the plural kinds of the substances present in the composition unless otherwise specified.

In a case in which plural kinds of particles corresponding to each constituent are present in a composition, the particle diameter of each constituent in the composition herein means the value of a mixture of the plural kinds of the particles present in the composition unless otherwise specified.

The term "film" herein encompasses the configuration of a shape formed on the entire surface as well as the configuration of a shape formed on a part of the surface in the case of being viewed in a plan view.

As used herein, "change into a conductor" refers to a change of metal-containing particles into a conductor by fusing the metal-containing particles. "Conductor" refers to an article having electroconductivity, and more specifically to an article having a volume resistivity of 300 µΩ·cm or less. The term "% by number" means a proportion (percentage) based on the number.

### <Copper-Containing Particles>

Copper-containing particles according to the invention each include: a core particle containing copper; and an organic substance on at least a part of a surface of the core particle, wherein a proportion of copper-containing particles having major-axis lengths of 50 nm or less is 55% by number or less with respect to the total number of the copper-containing particles.

A major axis of a copper-containing particle herein means the distance between two planes selected so that the distance between the two planes that circumscribe the copper-containing particle and are parallel to each other is the longest. The proportion of the copper-containing particles having major-axis lengths of 50 nm or less herein is a proportion thereof among 200 randomly-selected copper-containing particles. For example, in a case in which 110 copper-containing particles having major-axis lengths of 50 nm or less are present in 200 copper-containing particles, the proportion of the copper-containing particles having major-axis lengths of 50 nm or less is 55% by number.

The copper-containing particles of the invention have superior fusion property at a low temperature (for example, 150°C) because they have the configuration as described above.

In other words, in the copper-containing particles, the organic substance that exists on at least a part of the surface of a copper-containing core particle serves as a protective material, and inhibits the oxidation of the core particle. Therefore, favorable fusion property at a low temperature is maintained even after long-term storage in atmospheric air. The organic substance is thermally decomposed by heating for fusing the copper-containing particles to produce a conductor, as a result of which the organic substance disappears.

Furthermore, since the proportion of the copper-containing particles having major-axis lengths of 50 nm or less (hereinafter also referred to as "small-diameter particles") is 55% by number or less, the fusion property of the copper-containing particles as a whole at a low temperature is superior.

Although the reason why superior fusion property at a low temperature is exhibited in a case in which the proportion of small-diameter particles in copper-containing particles is 55% by number or less is unclear, the inventors of the present invention consider that the reason is as follows. By nature, smaller copper-containing particles tend to be more easily melted. However, there is a possibility that the ease of melting, which is caused by the smallness of the particles, is canceled out due to factors such as the easy release of an organic substance on the surfaces of the particles, which leads to high susceptibility of the particles to oxidation, or a high catalytic activity at the surfaces of the particles, which leads to the generation of a substance inhibiting the melting, whereby the particles are inhibited from being melted. It is considered that the favorable fusion property at a low temperature is maintained by reducing the proportion of the small-diameter particles among the total number of the copper-containing particles to 55% by number or less in the embodiments of the invention.

JP-A No. 2012-72418 and JP-A No. 2014-148732 describe that copper particles have an average particle diameter of 50 nm or less, and further have an average particle diameter of 20 nm. JP-A No. 2014-148732 also describes that copper particles having particle diameters of 10 nm or less and copper particles having particle diameters of from 100 nm to 200 nm coexist in the copper particles obtained in the Examples section. However, these documents neither specifically describe the proportions of small-diameter particles to all of the copper particles nor describe a suggestion that the smaller proportion of the small-diameter particles results in improvement in fusion property.

From the viewpoint of fusion property at a low temperature, the proportion of the copper-containing particles having major-axis lengths of 50 nm or less is preferably 50% by number or less, more preferably 35% by number or less, and still more preferably 20% by number or less.

From the viewpoint of fusion property at a low temperature, the proportion of copper-containing particles having major-axis lengths of 70 nm or more is preferably 30% by number or more, more preferably 50% by number or more, and still more preferably 60% by number or more. The proportion of the copper-containing particles having major-axis lengths of 70 nm or more herein is a proportion thereof in 200 randomly-selected copper-containing particles.

From the viewpoint of fusion property at a low temperature, the average major-axis length is preferably 55 nm or more, more preferably 70 nm or more, and still more preferably 90 nm or more. The average major-axis length herein is the arithmetic average value of the measured major-axis lengths of 200 randomly selected copper-containing particles.

From the viewpoint of fusion property at a low temperature, the average major-axis length is preferably 500 nm or less, more preferably 300 nm or less, and still more preferably 200 nm or less.

From the viewpoint of fusion property at a low temperature, the major-axis length of a copper-containing particle having a longest major-axis length (hereinafter also referred to as "maximum-diameter particle") among the particles is preferably 500 nm or less, more preferably 300 nm or less, and still more preferably 250 nm or less. The major-axis length of a maximum-diameter particle herein is the major-axis length of a copper-containing particle having the longest major-axis length among the major-axis lengths of 200 randomly selected copper-containing particles.

From the viewpoint of fusion property at a low temperature, the major-axis length of a copper-containing particle having a shortest major-axis length (hereinafter also referred to as "minimum-diameter particle") among the particles is preferably 5 nm or more, more preferably 8 nm or more, and still more preferably 10 nm or more. The major-axis length of a minimum-diameter particle herein is the major-axis length of a copper-containing particle having the shortest major-axis length among the major-axis lengths of 200 randomly selected copper-containing particles.

The major-axis length of a copper-containing particles may be adjusted by regulating conditions such as, for example, the kinds of raw materials, a temperature during mixing of the raw materials, reaction time, a reaction temperature, a washing step, a washing solvent, and the like in a method of producing copper-containing particles, described later.

From the viewpoint of promoting fusion at a low temperature, it is preferable that the copper-containing particles of the invention include a copper-containing particle having a concave and a convex on a surface thereof, and it is more preferable that the copper-containing particles include a copper-containing particle having a circularity of from 0.70 to 0.99 as the copper-containing particle having a concave and a convex on a surface thereof. The circularity is a value represented by 4π × S/(circumference)², in which S is an area of a target particle for measurement, and the circumference is the circumference of the target particle for measurement. The circularity may be determined by analyzing an electron microscope image by using an image processing software.

The reason why fusion at a low-temperature is promoted when the copper-containing particles include a copper-containing particle having a concave and a convex on a surface thereof is not clear. However, it is presumed that the presence of the concave and convex on a surface of a copper-containing particle causes a melting temperature to be decreased due to a so-called nano-size effect, thereby promoting fusion property at a low temperature.

The shapes of the copper-containing particles are not particularly restricted, and may be selected depending on the intended purpose. For example, an aspect ratio which is the ratio between the major and minor axes of a copper-containing particle (major axis/minor axis) may be selected from a range of from 1.0 to 10.0. In a case of applying a mixture of the copper-containing particles with a dispersion medium and the like to a substrate by a printing method, an average value of aspect ratios which are the ratios between the major and minor axes of the copper-containing particles (major axis/minor axis) is preferably from 1.5 to 8.0, because it is easy to adjust the viscosity of the mixture. The minor axis of a copper-containing particle means the distance between two planes selected so that the distance between the two planes that circumscribe the copper-containing particle and are parallel to each other is the shortest. The aspect ratios of the copper-containing particles may be examined by a usual method such as observation with an electron microscope.

In one embodiment of the invention, the average value of aspect ratios is preferably from 1.0 to 8.0, more preferably from 1.1 to 6.0, and still more preferably from 1.2 to 3.0. The average value of aspect ratios herein is a value obtained by determining the arithmetic average values of the major and minor axes of 200 randomly selected copper-containing particles, respectively, followed by dividing the obtained arithmetic average value of the major axis by the obtained arithmetic average value of the minor axis.

The aspect ratio of a copper-containing particle may be adjusted by regulating a condition such as, for example, the number of carbon atoms in a fatty acid used in a method of producing copper-containing particles described later.

The major-axis length of a copper-containing particle, the presence or absence of concave and convex on a surface of a copper-containing particle, the circularity of a copper-containing particle, and the aspect ratio of a copper-containing particle may be measured by a known method such as observation using an electron microscope. The magnification in a case of the observation using an electron microscope is not particularly restricted, and the observation may be performed at a magnification of, for example, from 20 times to 50,000 times. It should be noted that copper-containing particles having particle diameters of less than 3.0 nm are excluded from the targets for measurement.

In one embodiment of the invention, an organic substance that exists on at least a part of a surface of a copper-containing core particle includes a substance derived from an alkylamine. The presence of the organic substance and the alkylamine is confirmed by heating the copper-containing particle at a temperature which is equal to or higher than a temperature at which the organic substance is thermally decomposed in nitrogen atmosphere, followed by comparing the weights of the copper-containing particle before and after the heating. Examples of the alkylamine include an alkylamine used in the method of producing a copper-containing particle described later.

The proportion of an organic substance that exists on at least a part of a surface of a core particle is preferably from 0.1% by mass to 20% by mass with respect to the total amount of the core particle and the organic substance. Satisfactory oxidation resistance tends to be obtained when the proportion of the organic substance is 0.1% by mass or more. Fusion property at a low temperature tends to become favorable when the proportion of the organic substance is 20% by mass or less. The proportion of the organic substance with respect to the total amount of the core particle and the organic substance is more preferably from 0.3% by mass to 10% by mass, and still more preferably from 0.5% by mass to 5% by mass.

The core particle at least contains metallic copper, and may further contain another substance, if necessary. Examples of the substance other than copper include metals such as gold, silver, platinum, tin, or nickel, compounds containing the metal element(s), fatty acid copper salts described later, organic substances derived from an alkylamine or a reducing compound, copper oxides, and copper chlorides. From a viewpoint of forming a conductor having superior electroconductivity, a content of metallic copper in a core particle is preferably 50% by mass or more, more preferably 60% by mass or more, and still more preferably 70% by mass or more.

Since the organic substance exists on at least a part of a surface of a core particle in a copper-containing particle, the oxidation of copper is inhibited, and the content of oxide is small, even in a case in which the copper-containing particle is stored in atmospheric air. For example, in one embodiment, the content of oxide in a copper-containing particle is 5% by mass or less. The content of oxide in a copper-containing particle may be measured by, for example, X-ray diffraction (XRD).

### <Method of Producing Copper-Containing Particles>

The method of producing copper-containing particles is not particularly restricted. For example, copper-containing particles are produced by a method including a step of heating a composition containing a metal salt of a fatty acid and copper, a reducing compound, and an alkylamine. The method may further include another step such as a centrifugation step or a washing step after the heating step, if necessary.

The method uses, as a copper precursor, a metal salt of a fatty acid and copper. It is assumed that the use of such a copper precursor makes it possible to use an alkylamine having a lower boiling point (i.e., low molecular weight) as a reaction medium, as compared to a method according to JP-A No. 2012-72418 in which silver oxalate or the like is used as a copper precursor. As a result, it is considered that it becomes easier to thermally decompose or volatilize an organic substance that exists on a surface of a core particle in the obtained copper-containing particles, and it becomes easier to perform a change into a conductor at a low temperature.

### (Fatty Acid)

A fatty acid is a monovalent carboxylic acid represented by RCOOH (wherein R is a chain hydrocarbon group, which may be straight-chain or branched). The fatty acid may be either a saturated fatty acid or an unsaturated fatty acid. A straight-chain saturated fatty acid is preferred from the viewpoint of efficiently coating core particles to suppress oxidation. Only one fatty acid, or two or more kinds of fatty acids may be used.

It is preferable that the fatty acid has 9 or less carbon atoms. Examples of saturated fatty acids having 9 or less carbon atoms include acetic acid (having 2 carbon atoms), propionic acid (having 3 carbon atoms), butyric acid and isobutyric acid (having 4 carbon atoms), valeric acid and isovaleric acid (having 5 carbon atoms), caproic acid (having 6 carbon atoms), enanthic acid and isoenanthic acid (having 7 carbon atoms), caprylic acid, isocaprylic acid, and isocaproic acid (having 8 carbon atoms), and nonanoic acid and isononanoic acid (having 9 carbon atoms). Examples of unsaturated fatty acids having 9 or less carbon atoms include unsaturated fatty acids having at least one double bond in the hydrocarbon groups of the saturated fatty acids described above.

The type of the fatty acid may influence the properties such as dispersibility of the copper-containing particles in a dispersion medium, or the fusion property of the copper-containing particles. Therefore, it is preferable to select the type of the fatty acid depending on the application of the copper-containing particles. It is preferable to use a combination of a fatty acid having 5 to 9 carbon atoms and a fatty acid having 4 or less carbon atoms from the viewpoint of making the particle shapes uniform. For example, it is preferable to use a combination of nonanoic acid having 9 carbon atoms and acetic acid having 2 carbon atoms. The ratio between the fatty acid having 5 to 9 carbon atoms and the fatty acid having 4 or less carbon atoms that are used in combination is not particularly restricted.

A method of obtaining a salt compound (fatty acid copper) of a fatty acid and copper is not particularly restricted. For example, the salt compound may be obtained by mixing copper hydroxide and a fatty acid in a solvent, or a commercially available fatty acid copper salt may be used. Alternatively, the generation of a fatty acid copper and the generation of a complex formed between the fatty acid copper and a reducing compound may be performed in the same step by mixing copper hydroxide, a fatty acid, and the reducing compound in a solvent.

### (Reducing Compound)

It is assumed that in a case of mixing a reducing compound with a fatty acid copper salt, a composite compound such as a complex is formed between these compounds. As a result, it is considered that the reducing compound serves as an electron donor for copper ions in the fatty acid copper salt, the reduction of the copper ions is facilitated, and the liberation of copper atoms due to spontaneous thermal decomposition more easily occurs than in a case of a fatty acid copper salt in the state of forming no complex. Such reducing compounds may be used singly, or in combination of two or more kinds thereof.

Specific examples of the reducing compound include hydrazine, hydrazine compounds such as hydrazine derivatives, hydrazine hydrochloride, hydrazine sulfate, or hydrazine hydrate, hydroxylamine, hydroxylamine compounds such as hydroxylamine derivatives, and sodium compounds such as sodium borohydride, sodium sulfite, sodium hydrogen sulfite, sodium thiosulfate, or sodium hypophosphite.

A reducing compound having an amino group is preferred from the viewpoint of facilitating the formation of coordinate bonds with a copper atom in the fatty acid copper salt, facilitating the formation of a complex in the state of maintaining the structure of the fatty acid copper salt, and the like. Examples of the reducing compound having an amino group include hydrazine and derivatives thereof, and hydroxylamine and derivatives thereof.

From the viewpoint of lowering a heating temperature (for example, 150°C or less) in the step of heating a composition containing a fatty acid copper salt, a reducing compound, and an alkylamine (hereinafter also referred to as "heating step"), it is preferable to select a reducing compound capable of forming a complex which allow a copper atom to be reduced and released in a temperature range in which neither the vaporization nor decomposition of the alkylamine occurs. Examples of such a reducing compound include hydrazine and derivatives thereof, and hydroxylamine and derivatives thereof. The reducing compound enables nitrogen atoms forming a skeleton to form a coordinate bond with a copper atom, thereby forming a complex. The reducing power of the reducing compound is commonly higher than those of alkylamines, and therefore, the generated complex tends to spontaneously decompose under relatively mild conditions, thereby reducing and liberating the copper atom.

By selecting a preferred derivative from the derivatives of hydrazine and hydroxylamine instead of hydrazine or hydroxylamine, it is possible to regulate the reactivity with a fatty acid copper salt, and it is possible to produce a complex that spontaneously decomposes under desired conditions. Examples of the hydrazine derivatives include methylhydrazine, ethylhydrazine, n-propylhydrazine, isopropylhydrazine, n-butylhydrazine, isobutylhydrazine, sec-butylhydrazine, t-butylhydrazine, n-pentylhydrazine, isopentylhydrazine, neo-pentylhydrazine, t-pentylhydrazine, n-hexylhydrazine, isohexylhydrazine, n-heptylhydrazine, n-octylhydrazine, n-nonylhydrazine, n-decylhydrazine, n-undecylhydrazine, n-dodecylhydrazine, cyclohexylhydrazine, phenylhydrazine, 4-methylphenylhydrazine, benzylhydrazine, 2-phenylethylhydrazine, 2-hydrazinoethanol, and acetohydrazine. Examples of the hydroxylamine derivatives include N,N-di(sulfoethyl)hydroxylamine, monomethylhydroxylamine, dimethylhydroxylamine, monoethylhydroxylamine, diethylhydroxylamine, and N,N-di(carboxyethyl)hydroxylamine.

The ratio between the copper contained in the fatty acid copper salt and the reducing compound is not particularly limited, as long as a desired complex is formed. For example, the ratio (copper: reducing compound) may be within a range of from 1: 1 to 1: 4, and is preferably within a range of from 1: 1 to 1: 3, and more preferably within a range of from 1: 1 to 1: 2, on a molar basis.

### (Alkylamine)

The alkylamine is considered to function as a reaction medium for the decomposition reaction of the complex formed of a fatty acid copper salt and a reducing compound. In addition, the alkylamine is considered to scavenge protons generated by the reduction action of the reducing compound and to inhibit the acidification of a reaction solution and the oxidization of copper atoms.

Examples of the alkylamine include: a primary amine represented by RNH₂ (in which R is a hydrocarbon group, which may be cyclic or branched); a secondary amine represented by R₁R₂NH (in which R₁ and R₂ are hydrocarbon groups which may be the same as or different from each other and may be cyclic or branched); and an alkylenediamine in which two amino groups are substituted in a hydrocarbon chain. The alkylamine may include at least one double bond, and may include an atom such as oxygen, silicon, nitrogen, sulfur, or phosphorus. Only one kind of such an alkylamine may be used, or a combination of two or more kinds of such alkylamines may be used.

It is preferable that the hydrocarbon group of an alkylamine has 7 or less carbon atoms. In a case in which the hydrocarbon group of an alkylamine has 7 or less carbon atoms, the alkylamine tends to easily thermally decompose during the heating for fusing the copper-containing particles to form a conductor, and a change into a favorable conductor tends to be achieved. The hydrocarbon group of an alkylamine has more preferably 6 or less carbon atoms, and still more preferably 3 or more carbon atoms.

Specific examples of the primary amine include ethylamine, 2-ethoxyethylamine, propylamine, butylamine, isobutylamine, pentylamine, isopentylamine, hexylamine, cyclohexylamine, heptylamine, octylamine, nonylamine, decylamine, dodecylamine, hexadecylamine, oleylamine, 3-methoxypropylamine, and 3-ethoxypropylamine.

Specific examples of the secondary amine include diethylamine, dipropylamine, dibutylamine, ethylpropylamine, ethylpentylamine, dibutylamine, dipentylamine, and dihexylamine.

Specific examples of the alkylenediamine include ethylenediamine, N,N-dimethylethylenediamine, N,N'-dimethylethylenediamine, N,N-diethylethylenediamine, N,N'-diethylethylenediamine, 1,3-propanediamine, 2,2-dimethyl-1,3-propanediamine, N,N-dimethyl-1,3-diaminopropane, N,N'-dimethyl-1,3-diaminopropane, N,N-diethyl-1,3-diaminopropane, 1,4-diaminobutane, 1,5-diamino-2-methylpentane, 1,6-diaminohexane, N,N'-dimethyl-1,6-diaminohexane, 1,7-diaminoheptane, 1,8-diaminooctane, 1,9-diaminononane, and 1,12-diaminododecane.

It is preferable that the alkylamine includes at least one of alkylamines in which the hydrocarbon group thereof has 7 or less carbon atoms. As a result, copper-containing particles superior in fusion property at a low temperature can be produced. Alkylamines may be used singly, or in combination of two or more kinds thereof. The alkylamine may include an alkylamine in which the hydrocarbon group thereof has 7 or less carbon atoms, and an alkylamine in which the hydrocarbon group thereof has 8 or more carbon atoms. In a case of using a combination of an alkylamine in which the hydrocarbon group thereof has 7 or less carbon atoms and an alkylamine in which the hydrocarbon group thereof has 8 or more carbon atoms, the proportion of the alkylamine in which the hydrocarbon group thereof has 7 or less carbon atoms with respect to the total amount of the alkylamines is preferably 50% by mass or more, more preferably 60% by mass or more, and still more preferably 70% by mass or more.

The ratio between the copper included in the fatty acid copper salt and alkylamine is not particularly limited as long as desired copper-containing particles are obtained. For example, the ratio (copper: alkylamine) may be within a range of from 1: 1 to 1: 8, and is preferably within a range of from 1: 1 to 1: 6, and more preferably within a range of from 1: 1 to 1: 4, on a molar basis.

### (Heating Step)

A method of carrying out the step of heating a composition containing a fatty acid copper salt, a reducing compound, and an alkylamine is not particularly restricted. Examples of the method include: a method in which a fatty acid copper salt and a reducing compound are mixed with a solvent, and an alkylamine is then added to the mixture, followed by heating the resultant; a method in which a fatty acid copper salt and an alkylamine are mixed with a solvent, and a reducing compound is then added to the mixture, followed by heating the resultant; a method in which copper hydroxide and fatty acid which are starting materials for a fatty acid copper salt, a reducing compound, and an alkylamine are mixed with a solvent, followed by heating the mixture; and a method in which a fatty acid copper salt and an alkylamine are mixed with a solvent, and a reducing compound is then added to the mixture, followed by heating the resultant.

It is possible to carry out the heating step at a relatively low temperature, by using a fatty acid copper salt having 9 or less carbon atoms as a copper precursor. For example, the heating step may be performed at 150°C or less, and is preferably performed at 130°C or less, and more preferably performed at 100°C or less.

The composition containing a fatty acid copper salt, a reducing compound, and an alkylamine may further contain a solvent. From the viewpoint of promoting the formation of a complex with the fatty acid copper salt and the reducing compound, it is preferable that composition contains a polar solvent. As used herein, a polar solvent means a solvent capable of dissolving in water at 25°C. Use of an alcohol tends to promote the formation of a complex. The reason thereof is not clear, and is considered to be because the contact between the fatty acid copper salt and the reducing compound, which is soluble in water, is promoted while dissolving the fatty acid copper salt, which is a solid. Such solvents may be used singly, or in combination of two or more kinds thereof.

Examples of the polar solvent include alcohols capable of dissolving in water at 25°C. Examples of the alcohols capable of dissolving in water at 25°C include an alcohol having 1 to 8 carbon atoms and having at least one hydroxyl group in a molecule thereof. Examples of such alcohols include straight-chain alkyl alcohols, phenols, and an alcohol in which a hydrogen atom in hydrocarbon having an ether bond in a molecule is substituted by a hydroxyl group. An alcohol having two or more hydroxyl groups in a molecule thereof is also preferably used, from the viewpoint of expressing higher polarity. An alcohol including a sulfur atom, a phosphorus atom, a silicon atom, or the like may also be used depending on the application of produced copper-containing particles.

Specific examples of alcohols include methanol, ethanol, 1-propanol, 2-propanol, butanol, pentanol, hexanol, heptanol, octanol, allyl alcohol, benzyl alcohol, pinacol, propylene glycol, menthol, catechol, hydroquinone, salicyl alcohol, glycerin, pentaerythritol, sucrose, glucose, xylitol, methoxyethanol, triethylene glycol monomethyl ether, ethylene glycol, triethylene glycol, tetraethylene glycol, and pentaethylene glycol.

Of the alcohols, methanol, ethanol, 1-propanol, and 2-propanol are preferred, 1-propanol and 2-propanol are more preferred, and 1-propanol is still more preferred, since these alcohols have extremely high solubility in water.

### <Conductor-Forming Composition>

The conductor-forming composition in the invention contains: copper-containing particles in the invention; and a dispersion medium. The conductor-forming composition enables a change into a conductor at a low temperature because the composition contains the copper-containing particles in the invention, which have superior fusion property at a low temperature. Examples of the conductor-forming composition include electroconductive coatings, electroconductive pastes, and electroconductive inks.

The shapes of the copper-containing particles included in the conductor-forming composition are not particularly restricted. Specific examples thereof include spherical, long-grain, flat, and fibrous shapes. The shapes may be selected depending on the application of the copper-containing particles. It is preferable that the shapes of the copper-containing particles are a spherical or long-grain shape in a case of applying the conductor-forming composition to a printing method.

The kind of the dispersion medium is not particularly restricted. Depending on the application of the conductor-forming composition, the dispersion medium may be selected from organic solvents which are commonly used. The organic solvents may be used singly, or in combination of two or more kinds thereof. It is preferable that the dispersion medium includes at least one selected from the group consisting of terpineol, isobornylcyclohexanol, dihydroterpineol, and dihydroterpineol acetate, from the viewpoint of controlling the viscosity of the conductor-forming composition in a case of applying the conductor-forming composition to a printing method.

The viscosity of the conductor-forming composition is not particularly restricted, and may be selected depending on a method of using the conductor-forming composition. For example, the viscosity is preferably from 0.1 Pa·s to 30 Pa·s, and more preferably from 1 Pa·s to 30 Pa·s, in a case of applying the conductor-forming composition to a screen printing method. In a case of applying the conductor-forming composition to an ink jet printing method, the viscosity is preferably from 0.1 mPa·s to 30 mPa·s, and more preferably from 5 mPa·s to 20 mPa·s, depending on a standard on an ink jet head to be used. The viscosity of a paste was measured at 25°C using an E-type viscometer (manufactured by Toki Sangyo Co., Ltd., product name: VISCOMETER-TV22, applied cone-plate-type rotor: 3° × R17.65).

The conductor-forming composition may further contain a component other than the copper-containing particles and the dispersion medium, if necessary. Examples of such components include silane coupling agents, polymer compounds, radical initiators, and reducing agents.

### <Method of Producing Conductor>

A method of producing a conductor in the invention includes a step of heating the conductor-forming composition according to the invention (heating step). In the heating step, an organic substance on the surfaces of copper-containing particles included in the conductor-forming composition is thermally decomposed, and the copper-containing particles are fused. The heating step may be performed at a temperature 200°C or less, and preferably 150°C or less, because the conductor-forming composition is capable of forming a conductor at a low temperature.

The component in an atmosphere in which the heating step is performed is not particularly restricted, and may be selected from nitrogen, argon, or the like which is used in a usual step of producing a conductor. Alternatively, the heating may be performed in an atmosphere in which a reducing substance such as hydrogen or formic acid is saturated in nitrogen or the like. The pressure during the heating is not particularly restricted, and a reduced pressure tends to promote a change into a conductor at a lower temperature.

The heating step may be carried out at a constant temperature-raising rate or at an irregularly varied temperature-raising rate. A time period of the heating step is not particularly restricted, and may be selected in consideration of a heating temperature, a heating atmosphere, the amount of copper-containing particles, and the like. A heating method is not particularly restricted, and examples thereof include heating using a hot plate, heating using an infrared heater, and heating using a pulsed laser.

The method of producing a conductor may further include another step, if necessary. Examples of another step include: a step of applying a conductor-forming composition to a substrate before the heating step; a step of removing at least a part of volatile components included in the conductor-forming composition by drying or the like before the heating step; a step of reducing copper oxide generated by the heating in a reducing atmosphere after the heating step; a step of removing a remaining component by photonic curing after the heating step; and a step of applying a load on a conductor obtained after the heating step.

### <Conductor>

A conductor in the invention includes a structure in which the copper-containing particles according to the invention are fused to each other. The shape of the conductor is not particularly restricted, and examples thereof include a thin-film shape and a pattern shape. The conductor in the invention is usable in formation of a wiring of various electronic components, a coating film, or the like. In particular, since it is possible to produce the conductor in the invention at a low temperature, the conductor is preferably used in applications of formation of a metal foil, a wiring pattern, or the like on a substrate having poor heat resistance, such as a resin substrate. The conductor is also preferably used for applications such as decorations or printing which is not aimed at being energized.

In a case in which the conductor-forming composition is applied onto a substrate and heated to form a conductor, the material of the substrate is not particularly restricted, and may be electro conductive or may be non-electroconductive. Specific examples of the material include metals such as Cu, Au, Pt, Pd, Ag, Zn, Ni, Co, Fe, Al, or Sn, alloys of the metals, semiconductors such as ITO, ZnO, SnO, or Si, glass, carbon materials such as black lead or graphite, resins, papers, and any combinations thereof. The conductor is preferably applied particularly in a case of using a substrate formed from a material having relatively poor heat resistance, because it is possible to obtain the conductor by heating at a low temperature. Examples of the material having relatively poor heat resistance include thermoplastic resins. Examples of the thermoplastic resins include polyolefin resins such as polyethylene, polypropylene, or polymethylpentene, and polycarbonate resins. The shape of the substrate is not particularly restricted, and may be a plate, a stick, a roll, a film, or the like.

The conductor preferably has a volume resistivity of 75 µΩ·cm or less, more preferably 50 µΩ.cm or less, still more preferably 30 µΩ·cm or less, and particularly preferably 20 µΩ·cm or less.

The conductor in the invention is usable in various applications. Specifically, the conductor may be used as a member such as electric wiring, a heat radiation film, or a surface coating film, which is used in an electronic component such as a laminated plate, a solar cell panel, a display, a transistor, a semiconductor package, or a laminated ceramic capacitor. In particular, the conductor included in an apparatus in the invention is capable of being formed on a substrate such as a resin, and is therefore suitable for producing a flexible laminated plate, a solar cell panel, a display, or the like.

The conductor in the invention may be also preferably used as a plating seed layer, and may be applied in any kinds of metals, and in both plating methods of electrolytic plating and electroless plating. The plated conductor in the invention may be used in the various applications described above.

### <Apparatus>

The apparatus according to the invention includes the conductor according to the invention. The kind of the apparatus is not particularly restricted. Examples thereof include electronic components of a laminated plate, a solar cell panel, a display, a transistor, a ceramic capacitor, a semiconductor package, or the like, which includes a wiring, a coating film, or the like including the conductor according to the invention. Examples of the apparatus according to the invention also include electronic instruments, household electric appliances, industrial machines, and transportation machines including the electronic components.

### EXAMPLES

Hereinbelow, the invention will be described with reference to examples. However, the invention is not limited to the examples.

### Synthesis of Copper Nonanoate

To 91.5 g (0.94 mol) of copper hydroxide (special grade, KANTO CHEMICAL CO., INC.), 150 mL of 1-propanol (special grade, KANTO CHEMICAL CO., INC.) was added, followed by stirring. Then, 370.9 g (2.34 mol) of nonanoic acid (90% or more, KANTO CHEMICAL CO., INC.) was added to the resultant. The obtained mixture was stirred while heating the mixture in a separable flask at 90°C for 30 minutes. The obtained solution was filtrated while keeping the heating, to remove undissolved substances. Then, the resultant was allowed to stand to cool, suction filtration of generated copper nonanoate was performed, and washing with hexane was carried out until the washing liquid became transparent. The obtained powder was dried in an explosion-proof oven at 50°C for 3 hours, to thereby obtain copper(II) nonanoate. The yield was 340 g (yield of 96% by mass).

### Synthesis of Copper-Containing Particles

In a separable flask, 15.01 g (0.040 mol) of the copper(II) nonanoate obtained as described above and 7.21 g (0.040 mol) of copper(II) acetate anhydride (special grade, KANTO CHEMICAL CO., INC.) were put, and 22 mL of 1-propanol and 32.1 g (0.32 mol) of hexylamine (purity of 99%, Tokyo Chemical Industry Co., Ltd.) were added. The resultant was stirred while heating the resultant at 80°C in an oil bath, thereby dissolving the resultant. The separable flask was transferred into an ice bath, and the resultant was cooled until the temperature in the separable flask reached 5°C. Then, 7.72 mL (0.16 mol) of hydrazine monohydrate (special grade, KANTO CHEMICAL CO., INC.) was added to the resultant, and the resultant was further stirred in the ice bath. The molar ratio between copper and hexylamine was 1:4. Then, the resultant was stirred while heating the resultant at 90°C for 10 minutes in the oil bath. During this process, a reduction reaction attended with foaming proceeded, the inner wall of the separable flask presented a copper luster, and the solution was changed to a dark red color. The solution was subjected to centrifugation at 9,000 rpm (rev/min) for 1 minute to obtain a solid. A process of further washing the solid with 15 mL of hexane was repeated three times, whereby an acid residue was removed, and a copper cake A presenting a copper luster and including a powder of copper-containing particles was obtained.

A copper cake B was obtained in the same manner as in [1.2] except that heating and stirring attended with reduction reaction were performed for 20 minutes.

A copper cake C was obtained in the same manner as in [1.2] except that heating and stirring attended with reduction reaction were performed for 5 minutes.

A copper cake D was obtained in the same manner as in [1.2] except that heating and stirring attended with reduction reaction were performed for 2 minutes.

A copper cake E was obtained in the same manner as in [1.2] except that centrifugation was performed at 1,000 rpm (rev/min) for 10 seconds.

A copper cake F was obtained in the same manner as in [1.2] except that centrifugation was performed at 1,000 rpm (rev/min) for 20 seconds.

A copper cake G was obtained in the same manner as in [1.2] except that centrifugation was performed at 1,000 rpm (rev/min) for 30 seconds.

A copper cake H was obtained in the same manner as in [1.2] except that heating and stirring attended with reduction reaction were performed for 20 minutes, and centrifugation was performed at 200 rpm (rev/min) for 30 seconds to collect a supernatant liquid, followed by centrifugation at 9,000 rpm (rev/min) for 1 minute.

A copper cake I was obtained in the same manner as in [1.2] except that heating and stirring attended with reduction reaction were performed for 20 minutes, and centrifugation was performed at 200 rpm (rev/min) for 10 seconds to collect a supernatant liquid, followed by centrifugation at 9,000 rpm (rev/min) for 1 minute.

A copper cake J was obtained in the same manner as in [1.2] except that heating and stirring attended with reduction reaction were performed for 20 minutes, and centrifugation was performed at 1,000 rpm (rev/min) for 10 seconds.

A copper cake K was obtained in the same manner as in [1.2] except that heating and stirring attended with reduction reaction were performed for 20 minutes, and centrifugation was performed at 1,000 rpm (rev/min) for 20 seconds.

A copper cake L was obtained in the same manner as in [1.2] except that heating and stirring attended with reduction reaction were performed for 300 minutes.

A copper cake M was obtained in the same manner as in [1.2] except that heating and stirring attended with reduction reaction were performed for 210 minutes.

A copper cake N was obtained in the same manner as in [1.2] except that heating and stirring attended with reduction reaction were performed for 120 minutes.

A copper cake O was obtained in the same manner as in [1.2] except that heating and stirring attended with reduction reaction were performed for 360 minutes.

A copper cake P was obtained in the same manner as in [1.2] except that heating and stirring attended with reduction reaction were performed for 600 minutes.

A copper cake Q was obtained in the same manner as in [1.2] except that the molar ratio (copper nonanoate : copper acetate) between copper(II) nonanoate and copper(II) acetate anhydride was changed from 50: 50 to 40: 60.

A copper cake R was obtained in the same manner as in [1.2] except that the molar ratio (copper nonanoate : copper acetate) between copper(II) nonanoate and copper(II) acetate anhydride was changed from 50: 50 to 10: 90.

A copper cake S was obtained in the same manner as in [1.2] except that the molar ratio (copper nonanoate : copper acetate) between copper(II) nonanoate and copper(II) acetate anhydride was changed from 50: 50 to 30: 70.

A copper cake T was obtained in the same manner as in [1.2] except that the molar ratio (copper nonanoate : copper acetate) between copper(II) nonanoate and copper(II) acetate anhydride was changed from 50: 50 to 20: 80.

### <Observation of Copper-Containing Particles>

The copper-containing particles of the copper cakes A to T produced by the above-described methods were observed using a transmission electron microscope (product name: JEM-2100F, manufactured by JEOL Ltd.). The proportion (% by number) of copper-containing particles having major-axis lengths of 50 nm or less, the proportion (% by number) of copper-containing particles having major-axis lengths of 70 nm or more, the average value(nm) of major-axis lengths, and a circularity, among 200 randomly-selected copper-containing particles in each copper cake are shown in Table 1.

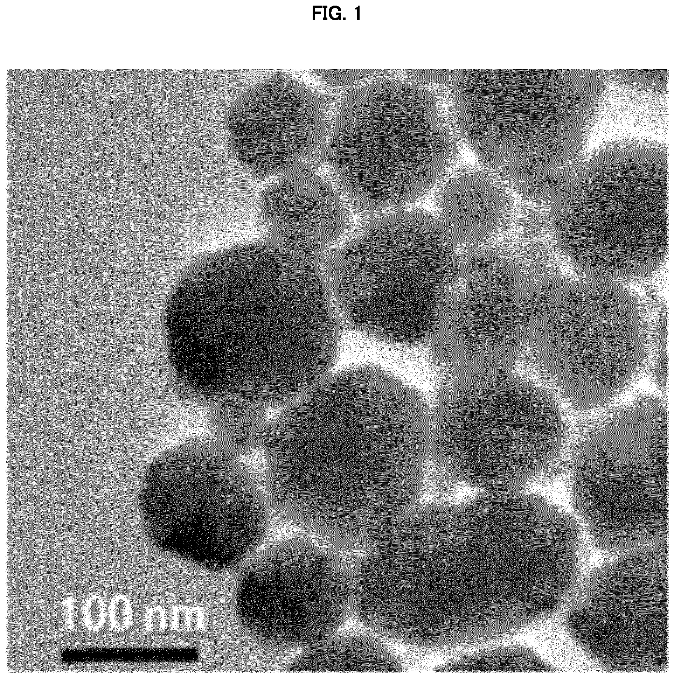

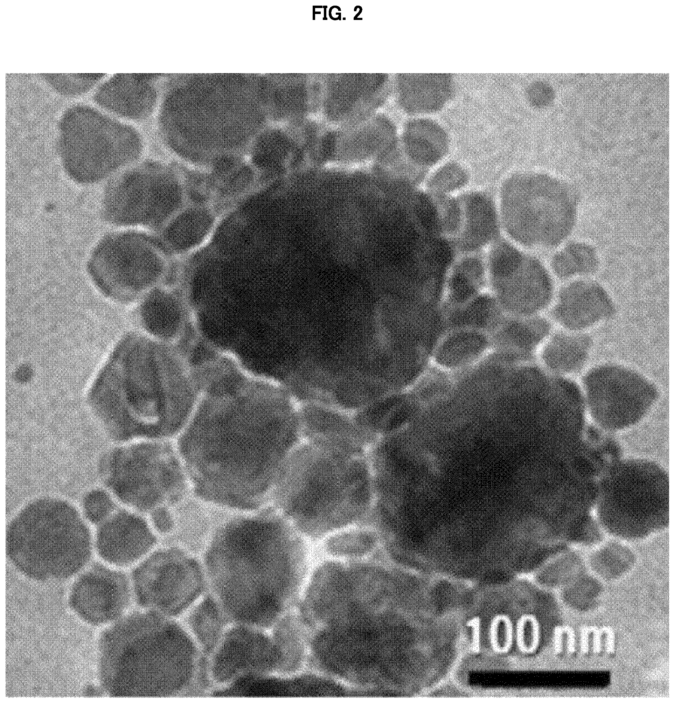

In addition, a transmission electron microscope image of the copper-containing particles of copper cake A is shown in Fig. 1, and a transmission electron microscope image of the copper-containing particles of copper cake C is shown in Fig. 2. As shown in Fig. 1 and Fig. 2, many large copper-containing particles existed in copper cake A, whereas large copper-containing particles and small copper-containing particles coexisted in copper cake C.

### <Evaluation of Change into Conductor at Low Temperature>

### [Example 1]

Copper cake A (60 parts by mass), terpineol (20 parts by mass), and isobornylcyclohexanol (trade name: TERUSOLVE MTPH, Nippon Terpene Chemicals, Inc.) (20 parts by mass) were mixed to prepare an electroconductive material. The obtained electroconductive material was applied onto a polyethylene naphthalate (PEN) film, and heated to form a thin film of metallic copper. The heating was performed by heating the material to 140°C at a temperature-raising rate of 40°C/min in an atmosphere in which the oxygen concentration in nitrogen was set at 100 ppm or less, and by maintaining the temperature for 60 minutes.

The volume resistivity of the obtained thin film of metallic copper was calculated from a surface resistance value measured using a four-point probe surface resistance measurement apparatus and a film thickness determined using a non-contact surface/layer cross-sectional shape measurement system (VertScan, Ryoka Systems Inc.). The results are shown in Table 1. Furthermore, the thin film of metallic copper was observed using a transmission electron microscope (product name: JEM-2100F, manufactured by JEOL Ltd.), and the fusion of copper-containing particles with each other was observed.

### <Comparative Example 1>

A thin film of metallic copper was formed, and the volume resistivity thereof was calculated, in the same manner as in Example 1 except that copper cake C was used. Furthermore, the thin film of metallic copper was observed using a transmission electron microscope (product name: JEM-2100F, manufactured by JEOL Ltd.), and many copper-containing particles that were not fused with adjacent copper-containing particles were observed.

### <Examples 2 to 18, Comparative Example 2>

Thin films of metallic copper were formed, and the volume resistivities thereof were calculated, in the same manner as in Example 1 except that the copper cakes shown in Table 1 were used. The results are shown in Table 1. In the table, "≤" means that a measurement value is equal to or less than the numerical value of the right side thereof.

**Table 1**

| Item | Copper cake | Proportion of copper particles having major-axis lengths of 50 nm or less (% by number) | Proportion of copper particles having major-axis lengths of 70 nm or more (% by number) | Average value of major-axis lengths (nm) | Circularity | Volume resistivity (µΩ·cm) |
|---|---|---|---|---|---|---|
| Example 1 | A | 50 | 20 | 45 | 0.83 | 60 |
| Example 2 | B | 30 | 40 | 60 | 0.85 | 22 |
| Comparative Example 1 | C | 60 | 30 | 40 | 0.88 | 800 |
| Comparative Example 2 | D | 80 | 5 | 20 | 0.85 | 2000 |
| Example 3 | E | 50 | 35 | 50 | 0.84 | 50 |
| Example 4 | F | 30 | 50 | 65 | 0.83 | 22 |
| Example 5 | G | 15 | 70 | 90 | 0.85 | 17 |
| Example 6 | H | 50 | 15 | 40 | 0.85 | 70 |
| Example 7 | I | 40 | 35 | 60 | 0.87 | 24 |
| Example 8 | J | 30 | 60 | 80 | 0.82 | 20 |
| Example 9 | K | 10 | 85 | 100 | 0.85 | 17 |
| Example 10 | L | ≤1 | 99 | 480 | 0.81 | 210 |
| Example 11 | M | ≤1 | 99 | 300 | 0.83 | 200 |
| Example 12 | N | ≤5 | 90 | 150 | 0.83 | 17 |
| Example 13 | O | ≤1 | 99 | 520 | 0.80 | 240 |
| Example 14 | P | ≤1 | 99 | 700 | 0.79 | 280 |
| Example 15 | Q | 15 | 70 | 90 | 0.71 | 17 |
| Example 16 | R | 15 | 70 | 90 | 0.96 | 20 |
| Example 17 | s | 15 | 70 | 90 | 0.65 | 90 |
| Example 18 | T | 15 | 70 | 90 | 0.55 | 100 |

As shown in the results of Table 1, the volume resistivities of the thin films of metallic copper produced in Comparative Example 1 or 2 in which the proportions of copper-containing particles having major-axis lengths of 50 nm or less exceeded 55% by number were larger than the volume resistivities of the thin films of metallic copper produced in each of Examples in which the proportions of copper-containing particles having major-axis lengths of 50 nm or less were 55% by number or less. This is considered to be because the particles having a major-axis length of 50 nm or less are more prone to undergo oxidation than the particles that are larger than the particles having a major-axis length of 50 nm or less, and a larger number of copper oxide particles that inhibit a change into a conductor exist in the thin film of metallic copper.

As shown in the results of Examples 1 to 14, there is not necessarily a tendency that the higher the average value of major-axis lengths is, the lower the volume resistivity is. It was suggested that the volume resistivity is favorable in a case in which the average value is within a certain range. Similarly, as shown in the results of Examples 15 to 18, it was suggested that there is a certain range of the circularity of copper-containing particles is in which a volume resistivity is favorable.

The entire disclosure of Japanese Patent Application No. 2015-038204 is incorporated herein by reference. All documents, patent applications, and technical standards described in this specification are herein incorporated by reference to the same extent as if each individual document, patent application, or technical standard was specifically and individually indicated to be incorporated by reference.

## Claims

1. Copper-containing particles, each of which comprises:
a core particle comprising copper; and
an organic substance on at least a part of a surface of the core particle,
wherein a proportion of copper-containing particles having major-axis lengths of 50 nm or less is 55% by number or less with respect to a total number of the copper-containing particles.

2. The copper-containing particles according to claim 1, wherein a proportion of copper-containing particles having major-axis lengths of 70 nm or more is 30% by number or more with respect to the total number of the copper-containing particles.

3. The copper-containing particles according to claim 1 or claim 2, wherein the copper-containing particles have an average major-axis length of 55 nm or more.

4. The copper-containing particles according to any one of claim 1 to claim 3, wherein the copper-containing particles have an average major-axis length of 500 nm or less.

5. The copper-containing particles according to any one of claim 1 to claim 4, comprising copper-containing particles having a circularity of from 0.70 to 0.99.

6. A conductor-forming composition, comprising:
the copper-containing particles according to any one of claim 1 to claim 5; and
a dispersion medium.

7. A method of producing a conductor, the method comprising: heating the conductor-forming composition according to claim 6.

8. A conductor, comprising a structure in which the copper-containing particles according to any one of claim 1 to claim 5 are fused to each other.

9. An apparatus, comprising the conductor according to claim 8.
